# EUROPÄISCHE PATENTANMELDUNG

(11) **EP 0 984 318 A2**
(43) Veröffentlichungstag der Anmeldung: **08.03.2000**
(21) Anmeldenummer: 99114576.4
(22) Anmeldetag: 24.07.1999
(51) Int. Cl.: G02F 1/19, G02F 1/15

(54) **Verbundglasscheibe mit elektrisch steuerbarem Reflexionsgrad**

(30) Priorität: 03.09.1998 DE 19840186
(71) Anmelder: DORNIER GmbH, 88039 Friedrichshafen (DE)
(72) Erfinder: Leupolz, Andreas, 88263 Horgenzell (DE); Golly, Monika, Dr., 88090 Immenstaad (DE); Kränzler, Thomas, 88682 Salem (DE); Scherber, Werner, Dr., 88697 Bermatingen (DE)
(74) Vertreter: Meel, Thomas

(57) **Zusammenfassung**

Die Erfindung betrifft eine Verbundglasscheibe mit elektrisch steuerbarem Reflexionsgrad, insbesondere zur Regelung des Eintrags von Sonnenlicht und Sonnenwärme in Fahrzeuge oder Gebäude. Sie weist folgenden Schichtaufbau auf:
- erste Glasscheibe (1b),
- elektroreflektive Funktionsschicht (6) aus einer Legierung des Hydrids eines Seltenerdmetalls und Magnesium,
- Oxidationsschutzschicht (5) aus einem protonenleitendem, transparentem Oxid oder Fluorid,
- wasserfreier, protonenleitender Festelektrolyt (4),
- Protonenspeicherschicht (3),
- transparente leitfähige Beschichtung (2),
- zweite Glasscheibe (1a).

## Beschreibung

Die Erfindung betrifft eine Verbundglasscheibe mit elektrisch steuerbarem Reflexionsgrad, insbesondere zur Regelung des Eintrags von Sonnenlicht und Sonnenwärme in Fahrzeuge oder Gebäude.

Scheibensysteme mit steuerbarer Lichtdurchlässigkeit sind z.B. aus der DE 36 29 879 C2 bekannt. Der Nachteil der dort verwendeten elektrochromen Scheibensysteme besteht darin, daß die Transmission durch eine Einfärbung, also durch einen absorptiven Wirkungsmechanismus geregelt wird. Im eingefärbten Zustand wird die Sonneneinstrahlung in der färbenden Schicht absorbiert und gelangt somit wie erwünscht nicht unmittelbar in den verglasten Raum. Durch die Absorption erwärmt sich jedoch die Scheibe selbst in starkem Maße. Vor allem bei längerer Sonneneinstrahlung führt dies zu einer unerwünschten zeitverzögerten indirekten Aufheizung des dahinter liegenden Raumes.

Eine Möglichkeit zur Reflexionssteuerung von Dünnfilmsystemen ist in der WO 96/38758 beschrieben. Die eigentliche Funktionsschicht besteht hier aus einer Seltenerdmetallhydridschicht mit Katalysatordeckschicht. Die Umschaltung der Reflexion beruht auf der reversiblen Änderung des Hydrierungszustands der Schicht zwischen einer metallischen hochreflektiven Dihydridphase und einer haibleitenden Trihydridphase mit sehr geringer Reflexion. Der Schaltvorgang wird durch eine katalytische Gasreaktion von wasserstoffhaltigem Gas hervorgerufen. Bei dieser Art der Ansteuerung ist eine Doppelscheibe mit Zwischenraum notwendig, wobei durch Ändern der Gaskonzentration im Scheibenzwischenraum die optischen Eigenschaften der Funktionsschicht geschaltet werden. Die Auslösung des Schaltvorgangs in den transparenten Zustand erfordert die Bereitstellung bzw. Erzeugung von wasserstoffhaltigem Gas, das in den Scheibenzwischenraum eingeleitet wird. Die Rückreaktion in den reflektiven Zustand kann z.B. durch Fluten des Zwischenraums mit Luft erfolgen. Eine Ausführung als geschlossenes System ist dadurch nur schwer möglich. Ein weiterer Nachteil dieses Systems besteht darin, daß eine Katalysatorschicht aus z.B. Palladium auf der eigentlichen Funktionsschicht benötigt wird, um den notwendigen atomaren Wasserstoff aus dem molekularen Wasserstoff zu erzeugen. Diese Katalysatorschicht limitiert die maximal erreichbare optische Transmission des Gesamtsystems auf maximal 40 %. Für viele Anwendungen sind diese Transmissionswerte nicht ausreichend. So sind z.B. für Kfz-Anwendungen 70 - 75 % Transmission unerläßlich.

Die Möglichkeit zur elektrischen Ansteuerung dieser Funktionsschichten wurde bisher lediglich als Laborexperiment [Notten et al, J.Electrochem.Soc., Vol.143, No.10, Oct. 1996] beschrieben. Hierbei wurde der Schaltvorgang an einer Einzelschicht durch die elektrolytische Zersetzung eines alkalischen wässrigen Elektrolyten ausgelöst. Für ein reversibel schaltbares geschlossenes Element ist dieser Aufbau nicht zweckmäßig, da die Zersetzung des Elektrolyts irreversibel unter Gasentwicklung statfindet.

Zur Steigerung der Reflexionswerte im visuellen Spektralbereich kann das aus der WO 96/38758 beschriebene Material der Funktionsschicht mit Magnesium legiert werden (P. van der Sluis, M Ouwerkerk, P.A. Duine Appl. Phys. Lett. 70 (25), 3356 (1997)).

In der WO 98/10329 A1 ist eine optische Schaltanordnung mit folgendem Schichtaufbau beschrieben:
- Glasscheibe,
- elektroreflektive Funktionsschicht aus einer Legierung des Hydrids eines Seltenerdmetalls und Magnesium,
- katalytisch aktive Schicht, die gleichzeitig als Oxidationsschutzschicht wirken soll; die hierfür eingesetzten Materialien sind Metalle (Pd) oder Verbindungen des Typs AB₂, AB₅, deren Transparenz relativ gering ist. So beträgt z.B. die Transparenz des Pd nur etwa 35 - 40 %.
- protonenleitender Festelektrolyt.
- Protonenspeicherschicht,
- transparente leitfähige Beschichtung.

Die EP 0 574 791 A2 offenbart eine Polymerelektrolytmembran aus sulfonierten Polyetherketonen für den Einsatz in Brennstoffzellen.

In der JP 07 - 043 753 A ist eine elektrochrome Zelle zur Steuerung des Lichteinfalls durch ein Fenster beschrieben, bei der eine Tantaloxid-Schicht zum Schutz der elektrochromen Funktionsschicht gegen den Kontakt mit dem organischen Elektrolyten vorhanden ist.

Der Erfindung liegt die Aufgabe zugrunde, eine Verbundglasscheibe zu schaffen, die im visuellen Bereich (insbesondere im Wellenlängenbereich zwischen 300 und 800 nm) durch Anlegen einer geringen elektrischen Steuerspannung zwischen einem hochtransparenten und reflektiven Zustand reversibel über viele Schaltzyklen umgeschaltet werden kann.

Diese Aufgabe wird mit dem Gegenstand des Patentanspruch 1 gelöst. Vorteilhafte Ausführungen sind Gegenstand von Unteransprüchen.

Die erfindungsgemäße Verbundglasscheibe besitzt folgenden Schichtaufbau:
- erste Glasscheibe,
- elektroreflektive Funktionsschicht aus einer Legierung des Hydrids eines Seltenerdmetalls und Magnesium,
- Oxidationsschutzschicht aus einem protonenleitendem, transparentem Oxid oder Fluorid,
- wasserfreier, protonenleitender Festelektrolyt,
- Protonenspeicherschicht,
- transparente leitfähige Beschichtung,
- zweite Glasscheibe.

Die Funktionsweise der erfindungsgemäßen Verbundglasscheibe ist folgendermaßen: Legt man an die transparente leitfähige Beschichtung und an die Funktionsschicht eine elektrische Spannung von typischerweise 2 V an, so daß an der Funktionsschicht der Minuspol der Spannungsquelle liegt, so wandern positiv geladene Protonen aus der Protonenspeicherschicht durch den Festelektrolyten an die Funktionsschicht und werden dort neutralisiert, so daß atomarer Wasserstoff entsteht. Durch eine reversible chemische Reaktion wird der atomare Wasserstoff in die Funktionsschicht eingelagert, wodurch sich das Material der Funktionsschicht von einem metallisch hochreflektiven in einen halbleitenden Zustand mit geringer Reflektion umwandelt. Polt man die elektrische Spannung um, so daß der Pluspol an der Funktionsschicht anliegt, bilden sich Protonen, die durch den Elektrolyten hindurch zurück in die Speicherschicht wandern. Die Funktionsschicht wird dadurch wieder zu einem Material mit metallischem Charakter umgewandelt. Auf die bei der bekannten Gasansteuerung notwendige Katalysatorschicht der elektroreflektiven Funktionsschicht kann verzichtet werden, da das Proton an der Oberfläche zu atomaren Wasserstoff reduziert wird, der direkt in die Funktionsschicht eindiffundieren kann.

Mit der erfindungsgemäßen Verbundglasscheibe kann somit durch elektrische Ansteuerung reversibel zwischen einem Zustand mit hoher Transmission und einem Zustand mit hoher Reflexion umgeschaltet werden. Dadurch ist es möglich den Wärmeeintrag in verglaste Objekte sehr wirkungsvoll zu regeln. Bei hoher Sonneneinstrahlung wird durch Reflexion an der Scheibe die Überhitzung des Objekts verhindert. Durch Umschaltung in den transparenten Zustand wird bei erwünschter Erwärmung bzw. Belichtung ein hohes Maß an Durchlässigkeit für Sonneneinstrahlung ermöglicht.

Bei der erfindungsgemäßen Verbundglasscheibe mit Reflexionssteuerung bleibt die Scheibe selbst durch Reflexion der solaren Strahlungsenergie weitgehend kalt. Dadurch läßt sich der Energiedurchtrittsgrad der Verglasung auch für Langzeitbestrahlung sehr effektiv regeln.

Da die Funktionsschicht zugleich eine Elektrode für die elektrische Ansteuerung bildet, wird ein homogener, ganzflächiger und schneller Schaltvorgang ermöglicht.

Durch die Tatsache, daß die Funktionsschicht innerhalb des Schichtaufbaus sehr nahe an der Außenfläche liegt, wird ein hoher Wirkungsgrad des Systems erreicht.

Mit der erfindungsgemäßen Verbundglasscheibe kann eine reversibles Schalten über eine große Zahl von Schaltzyklen erreicht werden. Für einen Schaltvorgang werden dabei nur geringe Schaltenergien von < 1 Wh/m² benötigt.

Die erfindungsgemäße Verbundglasscheibe kann insbesondere als Fahrzeug- oder Gebäudeverglasung eingesetzt werden. Ihr Einsatz ist aber auch möglich zur Lichtsteuerung, z.B. in Scheinwerfersystemen.

Die elektroreflektive Funktionsschicht besteht erfindungsgemäß aus einer Legierung der Hydride eines Seltenerdmetalls (insbesondere Yttrium, Gadolinium, Samarium) und Magnesium. Der Begriff elektroreflektiv beschreibt in der vorliegenden Anmeldung eine Schicht, deren Reflektivität sich durch elektrische Ansteuerung verändern läßt. Der Anteil des oder der Seltenerdmetalle liegt dabei bevorzugt im Bereich von 20 bis 80 %, z.B. Y₃₀Mg₇₀. Im Falle des Yttriums wird zwischen der metallischen Dihydridphase YH₂ und der halbleitenden Trihydridphase YH₃ reversibel geschaltet.

Der für den Schaltvorgang notwendige atomare Wasserstoff wird in der Speicherschicht als Proton gespeichert.
Sehr gut geeignet zur Protonenspeicherung sind Metalloxide, z.B auch kathodisch färbende elektrochrome Schichten, darunter insbesondere Wolframoxid WO₃. Wandern die Protonen aus der Funktionsschicht in eine solche elektrochrome Speicherschicht, so wird sich diese verfärben, im Falle des WO₃ blau. Da dieser Effekt für manche Anwendungen unerwünscht ist, kann es vorteilhaft sein, die elektrochrome Schicht so zu modifizieren, daß durch die Protonenspeicherung nur eine geringe Einfärbung hervorgerufen wird. Dies wird dadurch erreicht, daß das Wolframoxid mit Titanoxid TiO₂gemischt wird.
Weitere für die Protonenspeicherschicht geeignete Materialien sind MoO₃, Nb₂O₅, V₂O₅.

Der Transport der Protonen zwischen Speicherschicht und elektroreflektiver Funktionsschicht erfolgt durch den protonenleitenden Festelektrolyten. Dieser Elektrolyt muß wasserfrei sein, um eine Schädigung der wasserempfindlichen elektroreflektiven Funktionsschicht zu verhindern. In einer vorteilhaften Ausführung besteht der Elektrolyt aus einem Oligomer oder Polymer von sulfonierten Polyetherketonen (PEK, PEEK) mit einem mobilen Protonenträger wie z.B. Imidazol oder Pyrazol.
In einer weiteren Ausführung besteht der Elektrolyt aus einem Copolymer von Acrylamidopropansulfonsäure (AMPS) und einem weiteren (Meth-)acrylderivat und mobilen Protonenträger wie z.B. Imidazol oder Pyrazol. Besonders vorteilhaft wird als (Meth-)acrylderivat Methoxypolyethylenglykol(n)monomethacrylat mit n = 4-13, z.B. n=9 eingesetzt, wobei n die Anzahl der Ethylenglykoleinheiten ist.

Die Erfindung wird anhand von Zeichnungen näher erläutert. Es zeigen:
- Fig. 1: zeigt das Reflexionsverhalten einer ca. 70 nm dicken Legierungsschicht aus Yttrium mit ca. 50% Legierungsanteil an Magnesium in den zwei möglichen Schaltzuständen.
- Fig. 2: eine beispielhafte Ausführung der erfindungsgemäßen Verbundglasscheibe.

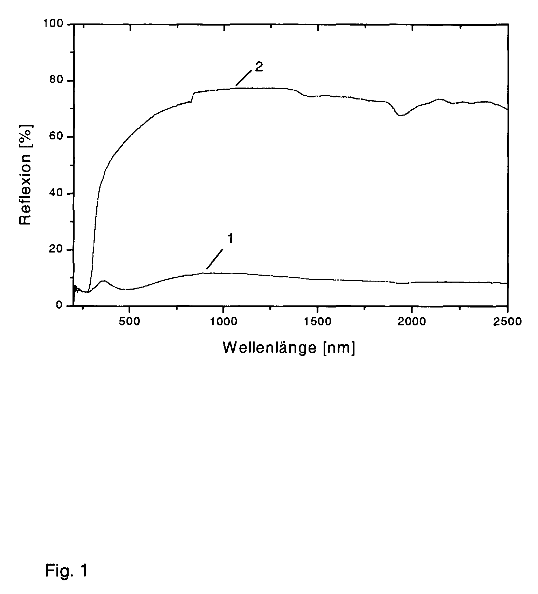

In Fig. 1 ist das Reflexionsverhalten einer ca. 70 nm dicken Legierungsschicht aus Yttrium mit ca. 50% Legierungsanteil an Magnesium dargestellt. Der eine Zweig 1 der Kurve zeigt das Verhalten im halbleitenden Zustand, in dem die Verbundglasscheibe im wesentlichen transparent ist. Der andere Zweig 2 zeigt das Verhalten im metallischen Zustand, in dem die Verbundglasscheibe hochreflektiv ist. Man erkennt aus dem Diagramm deutlich, daß der Schalteffekt bereits bei Wellenlängen von ca. 300 nm erzielbar ist, und den sichtbaren Bereich des elektromagnetischen Spektrums voll abdeckt.

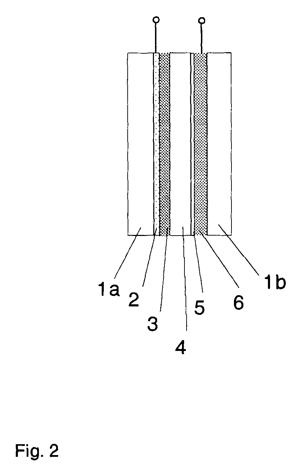

Fig. 2 zeigt eine Ausführung der erfindungsgemäßen Verbundglasscheibe. Er umfaßt einen Schichtaufbau mit folgenden Schichten:
- erste Glasscheibe 1b,
- elektroreflektive Funktionsschicht 6,
- Oxidationsschutzschicht 5,
- wasserfreier protonenleitender Festelektrolyt 4,
- Protonenspeicherschicht 3,
- transparente leitfähige Beschichtung 2,
- zweite Glasscheibe 1a.

Bei bestimmungsgemäßer Anwendung wird die Glasscheibe 1b der Strahlung, deren Eindringen verhindert werden soll, zugewandt sein. Bei einer Anwendung als Autoscheibe zum Beispiel wird die Glasscheibe 1b die äußere Scheibe sein.

Die elektroreflektive Funktionsschicht 6 aus einer Legierung der Hydride eines Seltenerdmetalls und Magnesium kann durch ein PVD-Verfahren (Vakuumverdampfung, Sputterverfahren) im Hochvakuum auf die Glasscheibe 1b aufgebracht werden. Um eine Oxidation der Funktionsschicht 6 bei der Entnahme aus der Vakuumapparatur und anschließenden Weiterverarbeitung zu verhindern, muß sie unter Aufrechterhaltung des Hochvakuums mit einer transparenten, ionendurchlässigen Oxidationsschutzschicht 5 versehen werden. Als Oxidationsschutzschichten werden erfindungsgemäß protonenleitende Oxide, wie z.B. Nioboxid NbO₃, Vanadiumoxid V₂O₅ Tantaloxid oder Fluoride, wie z.B. Magnesiumfluorid MgF₂ oder Bleifluorid PbF₂ eingesetzt. Diese Materialien weisen eine hohe Transparenz auf und erlauben damit hohe Transmissionswerte im transparenten Schaltzustand. Die Hydrierung der Funktionsschicht 6 kann entweder als Reaktivprozess direkt bei der Herstellung oder als anschließende elektrochemische Reaktion in einem Elektrolyten (z.B. KOH-Läsung) erfolgen.

Die zweite Glasscheibe 1a wird mit einer transparenten Leitfähigkeitsschicht 2 versehen (z.B. ITO) und mit der Protonenspeicherschicht 3 beschichtet. Letztere sorgt für die notwendige Stabilität des Systems, in dem der für den Schaltvorgang notwendige atomare Wasserstoff in der Protonenspeicherschicht als Proton gespeichert wird. Die Beladung der Schicht mit Protonen erfolgt elektrochemisch, bei Wolframoxid z.B. in einem Schwefelsäureelektrolyten.

Besonders vorteilhaft ist für diesen Vorgang der Protonenbeladung jedoch die Verwendung eines wasserfreien Elektrolyten, wie z.B. Trifluoressigsäure. So wird verhindert, daß an der Schicht anhaftendes Wasser aus dem Beladungsvorgang in die spätere Zelle gelangt.

Es hat sich gezeigt, daß es auch möglich ist, die Speicherschicht aus aprotischen Lösungsmitteln, wie z.B. Propylencarbonat mit Lithiumionen statt mit Protonen zu beladen, ohne daß die Zellfunktion beeinträchtigt wird.

Zur Herstellung der erfindungsgemäßen Verbundglasscheibe werden die beiden beschichteten Scheiben 1,a, 1b mittels des transparenten protonenleitenden Elektrolyten, über den der Protonentransport zwischen Speicherschicht 3 und elektroreflektiver Funktionsschicht 6 erfolgt, verklebt. Die Verarbeitung der Elektrolyte bei der Herstellung der Verbundglasscheibe kann dadurch erfolgen, daß eine Elektrolytfolie hergestellt wird, die zwischen den beschichteten Glasscheiben eingelegt und bei erhöhter Temperatur und Druck verklebt wird. Eine andere Möglichkeit besteht darin, aus den beschichteten Glasscheiben eine Küvette herzustellen, den Elektrolyten in flüssiger Form einzufüllen und anschließend durch Temperatur bzw. UV-Licht auszuhärten. Durch seine mechanischen Eigenschaften als polymerer Festelektrolyt sorgt er für eine gute mechanische Stabilität des Gesamtsystems mit entsprechenden Verbundglaseigenschaften.

Die Kontaktierung des Systems erfolgt in der gezeigten Ausführung über die der Protonenspeicherschicht 3 benachbarte Elektrode 2 und über die elektroreflektive Funktionsschicht 6. Anders als in der hier dargestellten Ausführung kann für die Kontaktierung aber auch eine separate Elektrode, z.B. aus ITO, zwischen Funktionsschicht 6 und erster Glasscheibe 1b vorhanden sein.

## Patentansprüche

1. Verbundglasscheibe mit elektrisch steuerbarem Reflexionsgrad, insbesondere zur Regelung des Eintrags von Sonnenlicht und Sonnenwärme in Fahrzeuge oder Gebäude, mit folgenden Schichtaufbau:
- erste Glasscheibe (1b),
- elektroreflektive Funktionsschicht (6) aus einer Legierung des Hydrids eines Seltenerdmetalls und Magnesium,
- Oxidationsschutzschicht (5) aus einem protonenleitendem, transparentem Oxid oder Fluorid,
- wasserfreier, protonenleitender Festelektrolyt (4),
- Protonenspeicherschicht (3),
- transparente leitfähige Beschichtung (2),
- zweite Glasscheibe (1a).

2. Verbundglasscheibe nach Anspruch 1, dadurch gekennzeichnet, daß zwischen erster Glasscheibe (1b) und elektroreflektiver Funktionsschicht (6) eine transparente leitfähige Beschichtung vorhanden ist.

3. Verbundglasscheibe nach einem der Ansprüche 1 oder 2, dadurch gekennzeichnet, daß der wasserfreie, protonenleitende Festelektrolyt (4) aus einem Oligomer oder Polymer von sulfonierten Polyetherketonen mit einem mobilen Protonenträger besteht.

4. Verbundglasscheibe nach einem der Ansprüche 1 oder 2, dadurch gekennzeichnet, daß der wasserfreie protonenleitende Festelektrolyt (4) aus einem Copolymer einer Acrylamidopropansulfonsäure und einem weiteren (Meth-)acrylderivat mit einem mobilen Protonenträger besteht.

5. Verbundglasscheibe nach Anspruch 4, dadurch gekennzeichnet, daß das (Meth-)acrylderivat ein Methoxypolyethylenglykol(n)monomethacrylat mit n = 4-13 ist, wobei n die Anzahl der Ethylenglykoleinheiten ist.

6. Verbundglasscheibe nach einem der vorangehenden Ansprüche, dadurch gekennzeichnet, daß die Protonenspeicherschicht (3) aus einem Metalloxid, z.B. einem kathodisch färbendem elektrochromem Material, vorzugsweise WO₃, oder MoO₃, Nb₂O₅, V₂O₅ besteht.

7. Verbundglasscheibe nach Anspruch 6, dadurch gekennzeichnet, daß die Protonenspeicherschicht (3) aus einer Legierung von Wolframoxid und Titanoxid besteht.

8. Verbundglasscheibe nach einem der vorangehenden Ansprüche, dadurch gekennzeichnet, daß die Oxidationsschutzschicht (5) aus einer der folgenden Verbindungen besteht: Nioboxid, Tantaloxid, Vanadiumoxid, Magnesiumfluorid, Bleifluorid.
